# EUROPÄISCHE PATENTSCHRIFT

(11) **EP 2 452 554 B1**
(45) Veröffentlichungstag und Bekanntmachung des Hinweises auf die Patenterteilung: **10.12.2014**
(21) Anmeldenummer: 11007455.6
(22) Anmeldetag: 14.09.2011
(51) Int. Cl.: A01F 29/00, B02C 4/00, B02C 13/09

(54) **Maschinenanlage zur Aufbereitung von Feldfrüchten**
Mechanical assembly for processing agricultural crops
Installation de machine pour le traitement de produits agricoles

(30) Priorität: 11.11.2010 DE 102010060485
(43) Veröffentlichungstag der Anmeldung: 16.05.2012
(73) Patentinhaber: Putsch GmbH & Co. KG, 58095 Hagen (DE)
(72) Erfinder: Lücke, Fred, 27404 Seedorf (DE); Rosenau, Volkmar, 27419 Gross Meckelsen (DE)
(74) Vertreter: Köchling, Conrad-Joachim

(56) Entgegenhaltungen:
- EP-A1- 1 982 573
- WO-A2-2008/124583
- DE-A1- 3 321 449
- DE-A1- 3 539 909
- US-A- 3 217 765

## Beschreibung

Die Erfindung betrifft eine Maschinenanlage zur Aufbereitung von Feldfrüchten zu Substrat für die Bioenergieerzeugung, mit einer ersten Maschine, die zum Zerkleinern von Feldfrüchten dient, wozu sie ein Maschinengehäuse mit einer oberen Befüllöffnung und einer in Arbeitslage untenliegenden Abgabeöffnung aufweist, eine im Gehäuse drehbar angeordnete angetriebene Trommel aufweist, die eine Vielzahl von Messern trägt, die mit einem an einer Innenwandung des Gehäuses angeordneten Gegenmesser eine Feldfruchtzerkleinerungseinheit bilden, wobei in Drehrichtung der Trommel dem Gegenmesser folgend die Abgabeöffnung vorgesehen ist, sowie mit einer zweiten Maschine, die an die Abgabeöffnung anschließend angeordnet ist, wobei die zweite Maschine zur Zerkleinerung der aus der ersten Maschine abgegebenen Feldfruchtstücke zu einem Mus dient, wozu sie ein Maschinengehäuse mit einer oberen Befüllöffnung und einer in Arbeitslage unten liegenden Abgabeöffnung aufweist und zwei im Gehäuse gegenläufig drehbar angeordnete angetriebene Walzen die einen Walzenspalt zum Zerquetschen der Feldfruchtstücke bilden, wobei die zerquetschte Masse aus der Abgabeöffnung abgegeben wird, wobei die erste Maschine auf die zweite Maschine aufgesetzt und mit dieser zu einer zweistufigen Funktionseinheit verbunden ist .

Aus der US 3,217,765 A ist eine Maschine gattungsgemäßer Art zur Bearbeitung von Getreideähren bekannt.

Bei der bekannten Maschine ist in einem zweiteiligen Maschinengehäuse die erste Maschine angeordnet, mittels derer Kornähren zerschnitten und gehackt werden. Unter dieser ersten Maschine ist eine zweite Maschine angeordnet und in Form einer Rollenmühle ausgebildet, um die Kornähren weiterhin zu zergliedern und das Korn auszubringen. Bei dieser bekannten Maschine sind die beiden in dem teilbaren Gehäuse angeordneten Maschinen durch einen gemeinsamen Antrieb angetrieben, der über eine Antriebswelle in Bewegung gesetzt wird, die mit einem Traktor oder einem Mähgerät verbunden werden kann. Der Antrieb der beiden Maschinen erfolgt durch Riementriebe, die mit dem Hauptantrieb in Verbindung stehen.

Eine solche Maschine ist zwar brauchbar, jedoch ist deren Nachteil, dass beide Maschinenteile nur gemeinsam betrieben werden können. Es handelt sich also nicht um autarke Antriebsaggregate, die separat betrieben werden können, sondern um eine Kombination von Maschinen mit einem gemeinsamen Antrieb. Dies ist hinsichtlich der Betriebsweise nachteilig. Insbesondere benötigt eine solche Maschine auch einen Antrieb durch einen Traktor oder einen Mähdrescher oder dergleichen.

Die erfindungsgemäße Maschine ist demgegenüber insbesondere für die Bioenergieerzeugung bestimmt, bei der Biogas oder Bioethanol erzeugt werden soll.

Ausgehend von dem eingangs genannten Stand der Technik liegt der Erfindung die Aufgabe zugrunde, eine Maschinenanlage zu schaffen, bei der die beiden Maschinen autarke Einheiten bilden, die separat betrieben werden können und separat gehändelt werden können, beispielsweise zur Reparatur oder Wartungszwecken.

Zur Lösung dieser Aufgabe schlägt die Erfindung vor, dass die Messer der ersten Maschine als radial vom Mantel der Trommel abragende Schlagmesser ausgeführt sind, die mit einem kammartigen Gegenmesser zusammenwirken, dass die Trommel der ersten Maschine schnelldrehend über einen Motor mit Keilriementrieb angetrieben ist, dass die Walzen der zweiten Maschine mittels eines Elektromotors und eines Riementriebes angetrieben sind.

Diese Maschinenanlage ist dazu geeignet und bestimmt, zur Feinstzerkleinerung von Feldfrüchten, insbesondere Rüben, eingesetzt zu werden, so dass die Feldfrüchte, insbesondere Rüben, zu einem Brei verarbeitet werden, der dann als Substrat in einer Bioenergieanlage eingesetzt werden kann. Voraussetzung für die Herstellung dieses Feinheitsgrades ist, dass die Rüben weitestgehend steinfrei sind, dass also mindestens 99 % des Steinbesatzes entfernt sind.

Erfindungsgemäß ist die Maschinenanlage als zweistufige Einheit aufgebaut. Die gewaschenen und weitestgehend von Steinen befreiten Feldfrüchte, insbesondere Rüben, werden mittels geeigneter Zuführeinrichtung in die Befüllöffnung der ersten Maschine eingegeben. In der ersten Maschine werden die Feldfrüchte, insbesondere die Rüben, in vordefinierte Stücke zerteilt. Die vorzugsweise direkt angeschlossene zweite Stufe in Form der zweiten Maschine verarbeitet diese Stücke zu einem Brei. Der Brei kann dann von der Abgabeöffnung der zweiten Maschine abgezogen und mittels geeigneter Pumpen in einen Bioenergieprozess gepumpt werden.

Die erste Maschine weist ebenso wie die zweite Maschine ein stabiles Blechgehäuse auf. Bei der ersten Maschine ist in dem Gehäuse eine vorzugsweise schnelllaufende Trommel drehbar und angetrieben eingebaut. Die Wellenenden der Trommel sind vorzugsweise außen in stabilen Lagern gelagert. Der Antrieb der Trommel erfolgt beispielsweise mittels eines Elektromotores. Die drehbar angeordnete, angetriebene Trommel weist eine Vielzahl von radialen, von ihrem Mantel abragenden Schlagmessern auf, die zur Zerkleinerung der Feldfrüchte, insbesondere Rüben dienen. Diese Schlagmesser arbeiten mit einem kammartigen Gegenmesser zusammen, welches innenseitig der Maschine an einer Gehäusewand angeordnet und befestigt ist. Das Gegenmesser ist kammartig ausgebildet und hat die gleiche Teilung wie die Schlagmesser, die auf der Trommel fixiert sind. Die Zerkleinerung der Feldfrüchte, insbesondere Rüben, erfolgt dadurch, dass diese von den Schlagmessern erfasst und in Richtung des kammartigen Gegenmessers befördert werden. Dabei reißen die Schlagmesser Stücke aus den Feldfrüchten aus und drücken diese durch die Öffnungen im kammartigen Gegenmesser. Die ausgeschnittenen Partikel fallen dann über die Abgabeöffnung heraus. Vorzugsweise ist die zweite Maschine unmittelbar unter der ersten Maschine angeordnet, so dass die Partikel, die die erste Maschine an der Abgabeöffnung verlassen, in die Befüllöffnung der zweiten Maschine einlaufen. Die zweite Maschine dient zur Zerkleinerung der aus der ersten Maschine abgegebenen Partikel zu einem Mus. In dieser zweiten Maschine wird nämlich aus dem zuvor zerteilten Stücken ein nahezu homogenes Gemisch mit relativ gleichmäßiger Korngröße hergestellt.

Die zweite Maschine weist zwei im Gehäuse gegenläufig drehbar angeordnete und angetriebene Walzen auf, die einen Walzenspalt zum Zerquetschen der Feldfruchtstücke bilden. Die zerquetschte Masse wird aus der Abgabeöffnung abgegeben und bestimmungsgemäß abgefördert.

Bei einem Aufeinanderbau der beiden Maschinen sind die beiden Maschinengehäuse miteinander verschraubt und stellen somit einen modularen Aufbau zur Verfügung. Die Maschinen sind in einfacher Weise voneinander zu trennen. Die Inneneinbauten können schnell und ohne großen Aufwand erreicht werden, so dass sie bei Bedarf problemlos gewartet oder gewechselt werden können. Die Größe der Einzelmaschinen und auch der Maschinenanlage ist darauf abgestellt, auch bei Kleinbetrieben vor Ort zur Zerkleinerung von Feldfrüchten, insbesondere Rüben, eingesetzt zu werden, damit vor Ort eine Bioenergieerzeugung erfolgen kann.

Demzufolge ist vorgesehen, dass die erste Maschine auf die zweite Maschine aufgesetzt und mit dieser zu einer zweistufigen Funktionseinheit verbunden ist.

Zudem ist vorgesehen, dass die Trommel der ersten Maschine schnelldrehend über einen Motor mit Keilriemenantrieb angetrieben ist.

Als Motor kann ein Elektromotor vorgesehen sein, der über einen Keilriementrieb mit einem Wellenstummel der Trommel in Eingriff ist, um diese anzutreiben.

Zudem ist vorgesehen, dass die Walzen der zweiten Maschine mittels eines Elektromotors und eines Riementriebes angetrieben sind. Durch entsprechende Anordnung des Riementriebes ist eine gegenläufige Drehung der beiden Walzen mit einem Antriebsmittel und einem Riemen möglich.

Bevorzugt ist ferner vorgesehen, dass die Schlagmesser jeweils in Reihen auf der Trommel angeordnet sind, wobei sie trommelseitig jeweils durch einen in eine Bohrung der Trommel eingesetzten Rundbolzen gehalten sind.

Die Schlagmesser sind jeweils in Reihen auf der Trommel angeordnet. Die Trommel weist entsprechende Einsteckschlitze auf, in die die Schlagmesser eingesteckt werden, wobei die Schlagmesser am Einsteckende eine Durchgangslochung aufweisen. Die Schlagmesser einer Reihe sind durch jeweils einen Rundbolzen gehalten, der in eine entsprechende Bohrung der Trommel eingebracht ist.

Des Weiteren ist bevorzugt vorgesehen, dass das kammartige Gegenmesser durch einen Scherbolzen am Maschinengehäuse gehalten ist, der vorzugsweise so eingestellt ist, dass er bei einem Hindernis eher bricht als die Schlagmesser und/oder das Gegenmesser.

Dadurch, dass das Gegenmesser durch einen Scherbolzen am Maschinengehäuse gehalten ist, ist in dem Fall, dass ein Hindernis, beispielsweise in Form eines Steines, in Eingriff gerät, nicht die Messer brechen, sondern der Scherbolzen bricht. Die Messer können demzufolge weiter verwendet werden, wobei lediglich ein neuer Scherbolzen eingesetzt werden muss.

Des Weiteren ist bevorzugt vorgesehen, dass die Walzen der zweiten Maschine eine gerillte Oberfläche haben.

Durch die gerillte Oberfläche der Walzen wird eine besonders schnelle und gute Musbildung beim Betrieb der Maschine gefördert.

Zudem ist bevorzugt vorgesehen, dass der Walzenspalt zwischen den Walzen einstellbar ist.

Auch kann vorgesehen sein, dass eine der Walzen gestellfest im Gehäuse gelagert ist und die andere Walze quer zur Durchsatzrichtung des zu zerkleinernden Gutes verstellbar ist.

Durch diese Anordnung kann der Feinheitsgrad des gebildeten Muses gesteuert werden.

Besonders bevorzugt ist vorgesehen, dass die verstellbare Walze unter Federkraft in die Solllage gedrückt ist und gegen die Kraft des Federmittels zur Vergrößerung des Walzenspaltes ausweichen kann.

Hierdurch wird erreicht, dass dann, wenn ein Festkörper auf die Walzen trifft und durch den Walzenspalt transportiert werden muss, die Walzen ausweichen können. Das heißt, die gegen Federkraft verstellbare Walze kann zur Vergrößerung des Walzspaltes nachgeben und nach Durchlass des Festkörpers wieder durch Federkraft in die Arbeitslage zurückgestellt werden.

Bevorzugt ist dabei vorgesehen, dass die Walzen schnelllaufend angetrieben sind.

Auch ist bevorzugt, dass die Walzen mit zueinander unterschiedlicher Drehzahl umlaufen.

Dabei kann vorgesehen sein, dass die Walzen zueinander unterschiedlichen Durchmesser aufweisen.

Die Walzen laufen vorzugsweise mit unterschiedlichen Drehzahlen um, damit dass in den Walzspalt eingeführte Gut nicht geschnitten, sondern gequetscht wird.

Ein Ausführungsbeispiel der Erfindung ist in der Zeichnung dargestellt und im Folgenden näher beschrieben. Es zeigt:

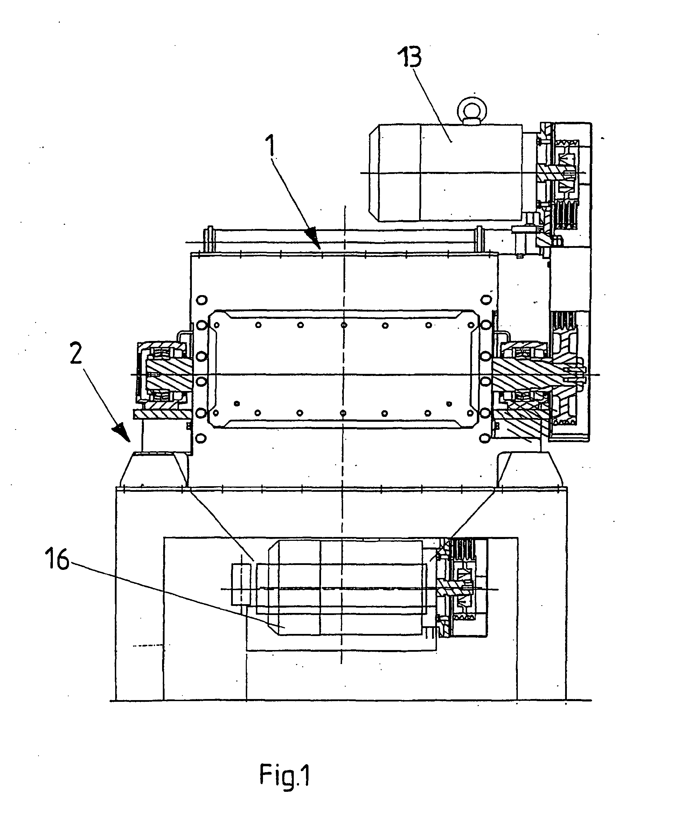

- Figur 1: eine erfindungsgemäße Maschinenanlage in Frontansicht;
- Figur 2: desgleichen in Seitenansicht, teilweise aufgebrochen;
- Figur 3: eine Einzelheit der Figur 2 im Mittelschnitt gesehen.

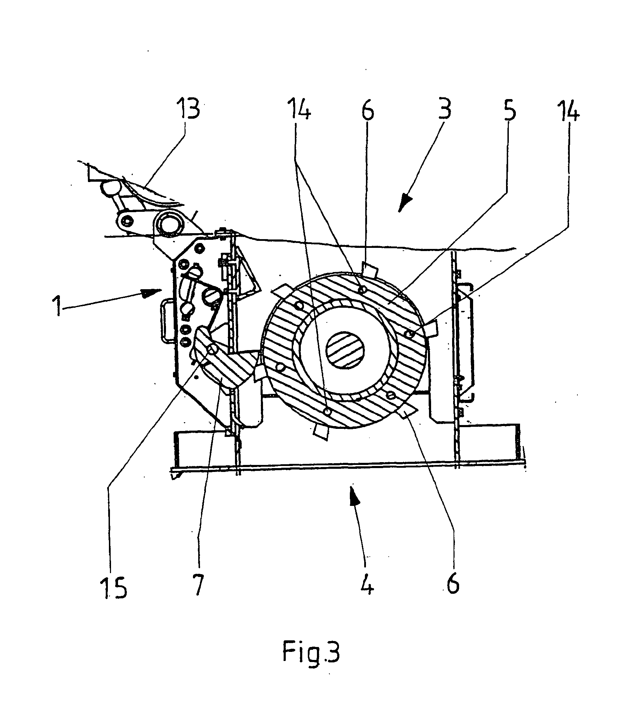

In der Zeichnung ist eine Maschinenanlage zur Aufbereitung von Feldfrüchten, insbesondere Rüben, zu Substrat, vorzugsweise für die Bioenergieerzeugung gezeigt. Die Maschinenanlage besteht aus einer ersten Maschine 1 und einer zweiten Maschine 2. Die erste Maschine 1, die in Figur 3 als Einzelelement dargestellt ist, dient zum Zerkleinern von Feldfrüchten. Sie weist ein Maschinengehäuse mit einer oberen Befüllöffnung 3 und einer in Arbeitslage unten liegenden Abgabeöffnung 4 auf. Im Gehäuse ist eine Trommel 5 drehbar angeordnet und angetrieben. Diese Trommel 5 weist eine Vielzahl von radial von ihrem Mantel abragenden Schlagmessern 6 auf. Diese Schlagmesser 6 wirken mit einem an der Innenwandung des Gehäuses angeordneten kammartigen Gegenmesser 7 zusammen und bilden eine Feldfruchtzerkleinerungseinheit. In Drehrichtung der Trommel 5 (gegen den Uhrzeigersinn) ist dem Gegenmesser 7 folgend die Abgabeöffnung 4 vorgesehen.

Die zweite Maschine 2, die vorzugsweise an die Abgabeöffnung 4 anschließend angeordnet ist, aber auch als separat betriebene Einheit vorgesehen sein kann, ist zur Zerkleinerung der aus der ersten Maschine 1 abgegebenen Feldfruchtstücke zu einem Mus vorgesehen. Dazu weist sie ein Maschinengehäuse mit einer oberen Befüllöffnung (bei 8) und einer in Arbeitslage unten liegenden Abgabeöffnung 9 auf. Im Gehäuse der zweiten Maschine 2 sind zwei gegenläufig drehbar angeordnete und angetriebene Walzen 11,12 gelagert, die einen Walzenspalt zum Zerquetschen der Feldfruchtstücke bilden, wobei die zerquetschte Masse aus der Abgabeöffnung 9 abgegeben wird.

Im Ausführungsbeispiel ist die erste Maschine 1 auf die zweite Maschine 2 aufgesetzt und mit dieser verschraubt, so dass eine zweistufige Funktionseinheit gebildet ist.

Die Trommel 5 der ersten Maschine ist schnell drehend über einen Motor 13 mit Keilriementrieb angetrieben, wobei der Keilriemen auf einen Wellenstummel der Trommel 5 einwirkt, um die Trommel 5 in Drehung zu versetzen. Die Trommel 5 ist mit ihren endseitigen Wellenstummeln in entsprechenden Lagern gelagert und gehalten.

Die Schlagmesser 6 sind jeweils in Reihen auf der Trommel 5 angeordnet. Trommelseitig sind sie jeweils durch einen in eine Bohrung der Trommel 5 eingesetzten Rundbolzen 14 gehalten. Das kammartige Gegenmesser 7 ist durch einen Scherbolzen 15 am Maschinengehäuse gehalten, der so eingestellt ist, dass er bei einem Fremdkörper als Hindernis eher bricht als die Schlagmesser 6 und/oder das Gegenmesser 7.

Die Walzen 11,12 der zweiten Maschine 2 weisen eine gerillte Oberfläche auf, um eine gute Musbildung zu erreichen. Zudem ist der Walzenspalt zwischen den Walzen 11 und 12 einstellbar, wobei vorzugsweise eine der Walzen gestellfest im Gehäuse gelagert ist und die andere Walze quer zur Durchsatzrichtung des zu zerkleinernden Gutes verstellbar ist, in der Zeichnung also in horizontaler Richtung.

Dabei ist bevorzugt vorgesehen, dass die verstellbare Walze, beispielsweise die Walze 11 gegen die Kraft eines Federmittels zur Vergrößerung des Walzspaltes ausweichen kann, sofern ein Fremdkörper durch den Walzspalt transportiert werden muss.

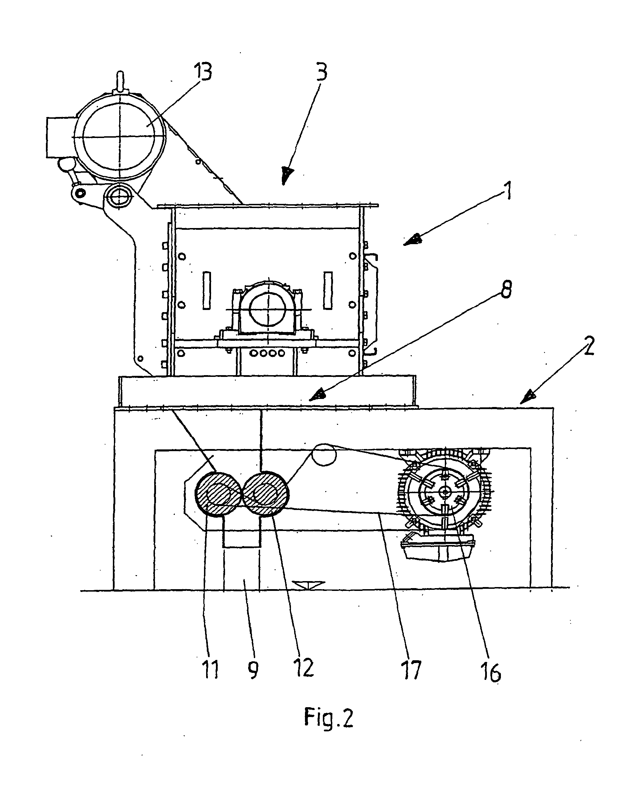

Auch die Walzen 11,12 der zweiten Maschine 2 sind mittels eines Elektromotores 16 und eines Riementriebes 17 angetrieben, wie insbesondere in Figur 2 ersichtlich. Die Walzen laufen mit relativ hoher Drehzahl um, wobei die Walzen 11,12 mit unterschiedlicher Drehzahl umlaufen, um das durchlaufende Material nicht zu schneiden, sondern zu quetschen. Vorzugsweise weisen hierzu die Walzen 11,12 zueinander unterschiedliche Durchmesser auf. Es kann damit in einfacher Weise mit einem Riementrieb und einem Antriebsmotor eine unterschiedliche Umlaufgeschwindigkeit realisiert werden.

## Patentansprüche

1. Maschinenanlage zur Aufbereitung von Feldfrüchten zu Substrat für die Bioenergieerzeugung, mit einer ersten Maschine (1), die zum Zerkleinern von Feldfrüchten dient, wozu sie ein Maschinengehäuse mit einer oberen Befüllöffnung (3) und einer in Arbeitslage untenliegenden Abgabeöffnung (4) aufweist, eine im Gehäuse drehbar angeordnete angetriebene Trommel (5) aufweist, die eine Vielzahl von Messern trägt, die mit einem an einer Innenwandung des Gehäuses angeordneten Gegenmesser (7) eine Feldfruchtzerkleinerungseinheit bilden, wobei in Drehrichtung der Trommel (5) dem Gegenmesser (7) folgend die Abgabeöffnung (4) vorgesehen ist, sowie mit einer zweiten Maschine (2), die an die Abgabeöffnung (4) anschließend angeordnet ist, wobei die zweite Maschine (2) zur Zerkleinerung der aus der ersten Maschine (1) abgegebenen Feldfruchtstücke zu einem Mus dient, wozu sie ein Maschinengehäuse mit einer oberen Befüllöffnung (8) und einer in Arbeitslage unten liegenden Abgabeöffnung (9) aufweist und zwei im Gehäuse gegenläufig drehbar angeordnete angetriebene Walzen (11,12), die einen Walzenspalt zum Zerquetschen der Feldfruchtstücke bilden, wobei die zerquetschte Masse aus der Abgabeöffnung (9) abgegeben wird, wobei die erste Maschine (1) auf die zweite Maschine (2) aufgesetzt und mit dieser zu einer zweistufigen Funktionseinheit verbunden ist, **dadurch gekennzeichnet, dass** die Messer der ersten Maschine als radial vom Mantel der Trommel (5) abragende Schlagmesser (6) ausgeführt sind, die mit einem kammartigen Gegenmesser (7) zusammenwirken, dass die Trommel (5) der ersten Maschine (1) schnelldrehend über einen Motor (13) mit Keilriementrieb angetrieben ist, dass die Walzen (11,12) der zweiten Maschine (2) mittels eines Elektromotors (16) und eines Riementriebes (17) angetrieben sind.

2. Maschinenanlage nach Anspruch 1, **dadurch gekennzeichnet, dass** die Schlagmesser (6) jeweils in Reihen auf der Trommel (5) angeordnet sind, wobei sie trommelseitig jeweils durch einen in eine Bohrung der Trommel (5) eingesetzten Rundbolzen (14) gehalten sind.

3. Maschinenanlage nach einem der Ansprüche 1 oder 2, **dadurch gekennzeichnet, dass** das kammartige Gegenmesser (7) durch einen Scherbolzen (15) am Maschinengehäuse gehalten ist, der so eingestellt ist, dass er bei einem Hindernis eher bricht als die Schlagmesser (6) und/oder das Gegenmesser (7).

4. Maschinenanlage nach einem der Ansprüche 1 bis 3, **dadurch gekennzeichnet, dass** die Walzen (11,12) der zweiten Maschine (2) eine gerillte Oberfläche haben.

5. Maschinenanlage nach einem der Ansprüche 1 bis 4, **dadurch gekennzeichnet, dass** der Walzenspalt zwischen den Walzen (11,12) einstellbar ist.

6. Maschinenanlage nach einem der Ansprüche 1 bis 5, **dadurch gekennzeichnet, dass** eine der Walzen (11,12) gestellfest im Gehäuse gelagert ist und die andere Walze (11,12) quer zur Durchsatzrichtung des zu zerkleinernden Gutes verstellbar ist.

7. Maschinenanlage nach Anspruch 6, **dadurch gekennzeichnet, dass** die verstellbare Walze (11,12) unter Federkraft in die Solllage gedrückt ist und gegen die Kraft des Federmittels zur Vergrößerung des Walzenspaltes ausweichen kann.

8. Maschinenanlage nach einem der Ansprüche 1 bis 7, **dadurch gekennzeichnet, dass** die Walzen (11,12) schnelllaufend angetrieben sind.

9. Maschinenanlage nach einem der Ansprüche 1 bis 8, **dadurch gekennzeichnet, dass** die Walzen (11,12) mit zueinander unterschiedlicher Drehzahl umlaufen.

10. Maschinenanlage nach einem der Ansprüche 1 bis 9, **dadurch gekennzeichnet, dass** die Walzen (11,12) zueinander unterschiedlichen Durchmesser aufweisen.

## Claims

1. A mechanical assembly for processing agricultural crops to a substrate for the production of bioenergy, comprising a first machine (1) for crushing agricultural crops, for which purpose it comprises a machine housing with an upper filling opening (3) and, in the working position, a lower dispensing opening (4), a driven drum (5) rotatably arranged in the housing with a plurality of knives forming together with a counter-knife (7) arranged at the inner wall of the housing a crushing unit for the agricultural crops, in the direction of rotation of the drum (5) behind the counter-knife (7) the dispensing opening (4) being provided, and a second machine (2) being arranged adjacent to the dispensing opening (4), the second machine (2) serving for crushing the agricultural crop pieces supplied from the first machine (1) to a pulp, for which purpose it has a machine housing with an upper filling opening (8) and, in the working position, a lower dispensing opening (9) and two driven drums (11, 12) rotatably arranged in opposite directions in the housing forming a drum gap for crushing the agricultural crop pieces, the crushed material being dispensed from the dispensing opening (9), the first machine (1) being placed onto the second machine (2) and being connected therewith so to form a two-step functional unit, **characterized in that** the knives of the first machine are configured as beat knives (6) radially projecting from the casing of the drum (5), said beat knives co-operating with a comb-like counter-knife (7), that the drum (5) of the first machine (1) is driven at high speed of rotation by means of a motor (13) with a V-belt drive, that the drums (11, 12) of the second machine (2) are driven by means of an electric motor (16) and a belt drive (17).

2. The mechanical assembly according to claim 1, **characterized in that** the beat knives (6) are respectively arranged in rows on the drum (5) and are respectively held on the drum side by a round bolt (14) inserted into a bore of the drum (5).

3. The mechanical assembly according to one of claims 1 or 2, **characterized in that** the comb-type counter-knife (7) is held at the machine housing by a shear bolt (15) being adapted such that in the event of an obstacle it will earlier break than the beat knives (6) and/or the counter-knife (7).

4. The mechanical assembly according to one of claims 1 to 3, **characterized in that** the drums (11, 12) of the second machine (2) have a grooved surface.

5. The mechanical assembly according to one of claims 1 to 4, **characterized in that** the drum gap between the drums (11, 12) is adjustable.

6. The mechanical assembly according to one of claims 1 to 5, **characterized in that** one of the drums (11, 12) is supported in the housing in a manner fixed with respect to the frame structure, and that the other drum (11, 12) is adjustable transversely to the flow direction of the material to be crushed.

7. The mechanical assembly according claim 6, **characterized in that** the adjustable drum (11, 12) is pressed by spring action into the desired position and can move against the force of the spring means so to increase the drum gap.

8. The mechanical assembly according to one of claims 1 to 7, **characterized in that** the drums (11, 12) are driven at high speed of rotation.

9. The mechanical assembly according to one of claims 1 to 8, **characterized in that** the drums (11, 12) rotate with different speeds of rotation.

10. The mechanical assembly according to one of claims 1 to 9, **characterized in that** the drums (11, 12) have different diameters.

## Revendications

1. Installation de machine pour le traitement de produits agricoles pour obtenir un substrat pour la production de bioénergie, comprenant une première machine (1) pour concasser des produits agricoles, consistant en un boîtier de machine avec une ouverture de remplissage supérieure (3) et, dans la position de fonctionnement, une ouverture de distribution inférieure (4), un tambour (5) entraîné et disposé de manière rotative dans le boîtier, ce tambour portant une pluralité de couteaux formant, ensemble avec un contre-couteau (7) disposé à une paroi intérieure du boîtier, une unité de déchiquetage des produits agricoles, dans le sens de rotation du tambour (5) derrière le contre-couteau (7) l'ouverture de distribution inférieure (4) étant prévue, et une deuxième machine (2) étant disposée voisine de l'ouverture de distribution (4), la deuxième machine (2) servant à concasser les pièces des produits agricoles fournies par la première machine (1) à un moût, pour ce but comprenant un boîtier de machine avec une ouverture de remplissage (8) supérieure et, dans la position de fonctionnement, une ouverture de distribution inférieure (9) et deux cylindres (11, 12) entraînés et disposés à contre-rotation dans le boîtier, ces cylindres formant un interstice des cylindres pour concasser les produits agricoles, la masse concassée étant distribuée à partir de l'ouverture de distribution inférieure (9), la première machine (1) étant placée sur la deuxième machine (2) et étant liée à celle-ci à former une unité fonctionnelle à deux étapes, **caractérisée en ce que** les couteaux de la première machine sont des couteaux batteurs (6) en saillie radialement de l'enveloppe du tambour (5) coopérant avec un contre-couteau (7) en forme de peigne, que le tambour (5) de la première machine (1) est entraîné au moyen d'un moteur (13) avec un entraînement à courroie trapézoïdale, que les cylindres (11, 12) de la deuxième machine sont entraînés au moyen d'un moteur électrique (16) et un entraînement à courroie (17).

2. Installation de machine selon la revendication 1, **caractérisée en ce que** les couteaux batteurs (6) sont disposés respectivement dans des rangées sur le tambour (5), et sont maintenus au côté du tambour par un goujon cylindrique (14) inséré dans une forure du tambour (5).

3. Installation de machine selon une des revendications 1 ou 2, **caractérisée en ce que** le contre-couteau (7) en forme de peigne est maintenu au boîtier de la machine par un boulon de cisaillement (15), qui est configuré de telle manière, s'il y ait un obstacle, qu'il rompe plus tôt que les couteaux batteurs (6) et/ou le contre-couteau (7).

4. Installation de machine selon une des revendications 1 à 3, **caractérisée en ce que** les cylindres (11, 12) de la deuxième machine (2) ont une surface cannelée.

5. Installation de machine selon une des revendications 1 à 4, **caractérisée en ce que** l'interstice entre les cylindres (11, 12) est réglable.

6. Installation de machine selon une des revendications 1 à 5, **caractérisée en ce qu'**un des cylindres (11, 12) est logé solidairement du bâti dans le boîtier, et que l'autre cylindre (11, 12) est réglable transversalement au sens de passage de la matière à être concassée.

7. Installation de machine selon la revendication 6, **caractérisée en ce que** le cylindre (11, 12) réglable est poussé sous la force d'un ressort dans la position voulue et peut fléchir contre la force du moyen de ressort pour élargir l'interstice des cylindres.

8. Installation de machine selon une des revendications 1 à 7, **caractérisée en ce que** les cylindres (11, 12) sont entraînés à haute vitesse de rotation.

9. Installation de machine selon une des revendications 1 à 8, **caractérisée en ce que** les cylindres (11, 12) tournent à des vitesses de rotation différentes.

10. Installation de machine selon une des revendications 1 à 9, **caractérisée en ce que** les cylindres (11, 12) ont des diamètres différents.
